# EUROPÄISCHE PATENTSCHRIFT

(11) **EP 0 562 252 B1**
(45) Veröffentlichungstag und Bekanntmachung des Hinweises auf die Patenterteilung: **17.05.1995**
(21) Anmeldenummer: 93101939.2
(22) Anmeldetag: 08.02.1993
(51) Int. Cl.: F27B 7/38, F27D 15/02, C04B 7/47

(54) **Verfahren und Rostkühler zum Kühlen von heissem Schüttgut**
Process and grate cooler for the cooling of warm bulk material
Procédé et refroidisseur à grilles pour refroidir des matières en vrac chaudes

(30) Priorität: 04.03.1992 DE 4206837
(43) Veröffentlichungstag der Anmeldung: 29.09.1993
(73) Patentinhaber: KRUPP POLYSIUS AG, 59269 Beckum (DE)
(72) Erfinder: Kupper, Detlev, Dipl.-Ing., W-4404 Telgte (DE); Brentrup, Ludger, Dr.-Ing., W-4740 Oelde 1 (DE); Kästingschäfer, Gerhard, Dipl.-Ing., W-4724 Wadersloh (DE)
(74) Vertreter: Tetzner, Volkmar, Dr.-Ing. Dr. jur.

## Beschreibung

Die Erfindung betrifft ein Verfahren zum Kühlen von heißem Schüttgut, insbesondere Zementklinker, Erzmaterial oder dergleichen (entsprechend dem Oberbegriff des Anspruches 1) sowie einen Rostkühler für das genannte heiße Schüttgut (entsprechend dem Oberbegriff des Anspruches 9).

Kühlverfahren und Rostkühler der vorausgesetzten Art sind aus der Praxis in verschiedenen Ausführungsformen hinreichend bekannt, siehe z.B. US-A-4 624 636.

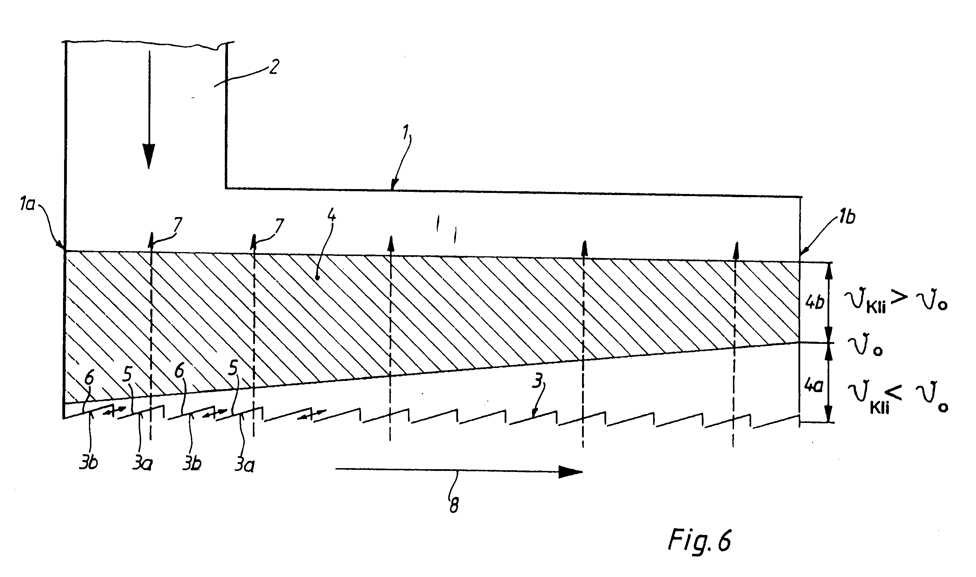

Aus Untersuchungen und Beobachtungen an bekannten Rostkühlern beispielsweise zum Kühlen von Zementklinker ist es bekannt, daß bei diesen in der Praxis verwendeten Kühlern das effektiv wirksame Volumen für zu kühlendes Schüttgut (z.B. Zementklinker) in Transportrichtung entlang der Kühlrostfläche abnimmt. Dies führt dazu, daß insbesondere in den in Transportrichtung hinteren bzw. Nachkühlbereichen eine relativ große Kühlrostfläche benötigt wird, um das Schüttgut ausreichend zu kühlen. Dieser Sachverhalt sei anhand Fig.6 der ganz schematisch gehaltenen Zeichnung kurz erläutert.

In Fig.6 ist mit 1 nur ganz schematisch ein Rostkühler veranschaulicht, der einen Einlaufschacht 2 für aus einem Ofen kommendes heißes Schüttgut (z.B. Zementklinker) und eine Kühlrostfläche 3 besitzt, die sich in Längsrichtung des Kühlers zwischen einem Kühlereinlauf 1a und einem Kühlerauslauf 1b erstreckt. Diese Kühlrostfläche 3 bildet somit eine Transportfläche für zu kühlendes Schüttgut 4, und sie weist - wie an sich bekannt - im wesentlichen einander abwechselnde Reihen (Querreihen) 3a bzw. 3b von feststehenden und hin- und herbeweglichen Rostplatten 5 bzw. 6 auf, die mit Gasdurchtrittsöffnungen versehen sind und von Kühlgas bzw. Kühlluft (vgl. gestrichelte Pfeile 7) von unten nach oben - im Kreuz- bzw. Querstrom - durchströmt werden.

Betrachtet man die Darstellung in Fig.6, so erkennt man dort - wie durch weiß gehaltene und schraffierte Schüttgutschichten 4a bzw. 4b dargestellt - eine Abnahme des effektiven Kühlvolumens in Schüttgut-Transportrichtung (Pfeil 8), wobei dieser Abnahme zumindest im sogenannten Rekuperationsbereich das Prinzip der ansteigenden Betthöhe in Transportrichtung entgegenwirken kann, wenn man den Rostkühler - wie ebenfalls allgemein bekannt - in Form eines Stufenrostkühlers ausbildet. Durch ein Ansteigen der Schüttgut-Betthöhe kann dann das effektive Kühlvolumen annähernd konstantgehalten werden, wobei aber die gesamte Betthöhe in Transportrichtung und dementsprechend auch der Druckverlust für die Kühlluft ansteigt.

Ähnlich verhält es sich auch bei anderen bekannten Ausführungen, von denen beispielsweise die US-A-4 624 636 genannt sei. Nach dem Ausführungsbeispiel der dortigen Fig.1 können die Gasdurchtrittsöffnungen der die Kühlrostfläche bildenden Rostplatten offensichtlich so groß sein, daß durch sie ein gewisser Feinanteil des zu kühlenden Schüttgutes nach unten hindurchfällt, wo es von besonders ausgebildeten Abteilen aufgenommen und abgeleitet wird, d.h. es kann hier eine gewisse Absiebung des unmittelbar auf der Kühlrostfläche entlangwandernden Feinanteiles aus einer untersten Gutschicht entlang der gesamten Kühlrostfläche nach unten ausfallen, wobei eine einigermaßen genaue Steuerung dieses nach unten ausfallenden Feinanteiles auf Schwierigkeiten stößt.

Der Erfindung liegt daher die Aufgabe zugrunde, ein Verfahren und einen Rostkühler der im Oberbegriff des Anspruches 1 bzw. im Oberbegriff des Anspruches 9 vorausgesetzten Art in der Weise zu verbessern, daß durch relativ einfache und gut steuerbare Maßnahmen eine besonders intensive Kühlwirkung mit verhältnismäßig niedrigen Investitions- und Betriebskosten erzielt werden kann.

Diese Aufgabe wird erfindungsgemäß durch die kennzeichnenden Merkmale des Anspruches 1 bzw. des Anspruches 9 gelöst.

Vorteilhafte Ausgestaltungen der Erfindung sind Gegenstand der Unteransprüche.

Die Erfindung sei nachfolgend anhand der Zeichnung näher erläutert. In dieser Zeichnung zeigen:
- Fig.1: eine schematische Längsschnittansicht durch einen erfindungsgemäßen Rostkühler;
- Fig.2: eine vereinfachte perspektivische Detailansicht (Ausschnitt) einiger Rostplattenreihen, zur Veranschaulichung einer ersten Ausführungsform für die Ausbildung von Schüttgut-Abzugsstellen;
- Fig.3, 4 u. 5: Teil-Längsschnittansichten durch den Rostkühler, zur Darstellung weiterer Ausführungsbeispiele für die Anordnung und Ausbildung von Schüttgut-Abzugsstellen;
- Fig.6: eine Längsschnittansicht durch eine allgemeine Ausführungsform eines Rostkühlers, zur Erläuterung von Schichtungen und Temperaturverteilungen im Schüttgutbett, insbesondere im Zusammenhang mit dem bekannten Stand der Technik.

Zur Erläuterung des Erfindungsgedankens sei zunächst nochmals auf Fig.6 Bezug genommen, in der als ein (insbesondere bevorzugtes) Beispiel ein sogenannter Schubrostkühler dargestellt ist. Ganz besonders geeignet ist dieser Schubrostkühler 1 zum Abkühlen von heißem Zementklinker, der in diesem Falle das Schüttgut 4 bildet und der durch den Einlaufschacht 2 von einem nicht näher veranschaulichten Brennofen abgeworfen wird und am Kühlereinlauf 1a auf die Kühlrostfläche 3 gelangt. Bei der Transportbewegung des zu kühlenden Schüttgutes 4 bilden sich in dem Schüttgutbett eine in Transportrichtung (Pfeil 8) ansteigende (dicker werdende) untere Schüttgutschicht 4a und eine darüberliegende - schraffierte - obere Schüttgutschicht 4b hinsichtlich der Temperaturverteilung aus, wenn entsprechend den Pfeilen 7 Kühlgas bzw. Kühlluft von unten her zugeführt und im Kreuzstrom durch dieses Schüttgutbett nach oben hindurchgeleitet wird. Nimmt man an, daß im Übergangsbereich von der unteren Schüttgutschicht 4a in die obere Schüttgutschicht 4b eine Temperatur von ϑ₀ herrscht, dann herrscht in der unteren Schüttgutschicht 4a eine Temperatur ϑ_{Kli} < ϑ₀, während in der oberen Schüttgutschicht 4b eine Temperatur ϑ_{Kli} > ϑ₀ herrscht. In dem Bereich unterhalb des Grenztemperaturbereiches ϑ₀, also in der unteren Schüttgutschicht 4a, hat das Schüttgut 4 in jedem Falle bereits eine ausreichende Kühlung erhalten.

In Erkenntnis dieser Schichtungen und Temperaturverteilungen in dem transportierten Bett des zu kühlenden Schüttgutes (Klinkers) 4 wird erfindungsgemäß nun auf dem Transportweg des zu kühlenden Schüttgutes auf der Kühlrostfläche vor dem Kühlerauslauf wenigstens eine Schüttgut-Teilmenge vor allem aus einem unteren Teil des Schüttgutbettes bzw. der Schüttgutschicht 4a durch Schwerkraft nach unten abgezogen. Bei den der Erfindung zugrundeliegenden Versuchen wurde nämlich herausgefunden, daß durch die genannte Schichtung des zu kühlenden Schüttgutes 4 in Strömungsrichtung des Kühlgases (Pfeile 7) ein Temperaturgradient im Schüttgutbett entsteht, der sich dadurch auswirkt, daß die untere Schüttgutschicht, die zuerst mit dem eintretenden Kühlgas in Kontakt kommt, am kühlsten ist, während das Schüttgut an der Oberseite des Schüttgutbettes, an der das Kühlgas aus dem Schüttgut wieder austritt, am heißesten ist. Somit wird erfindungsgemäß vor allem von der unteren Schüttgutschicht vor dem Kühlerauslauf 1b wenigstens ein Teil durch Schwerkkraft nach unten abgezogen, so daß darüberliegende heißere Schüttgutschichten auf der Kühlrostfläche 3 nach unten nachsinken können. Auf diese Weise behindert bereits genügend abgekühltes Schüttgut nicht mehr die Kühlung des darüber liegenden heißeren Schüttgutes.

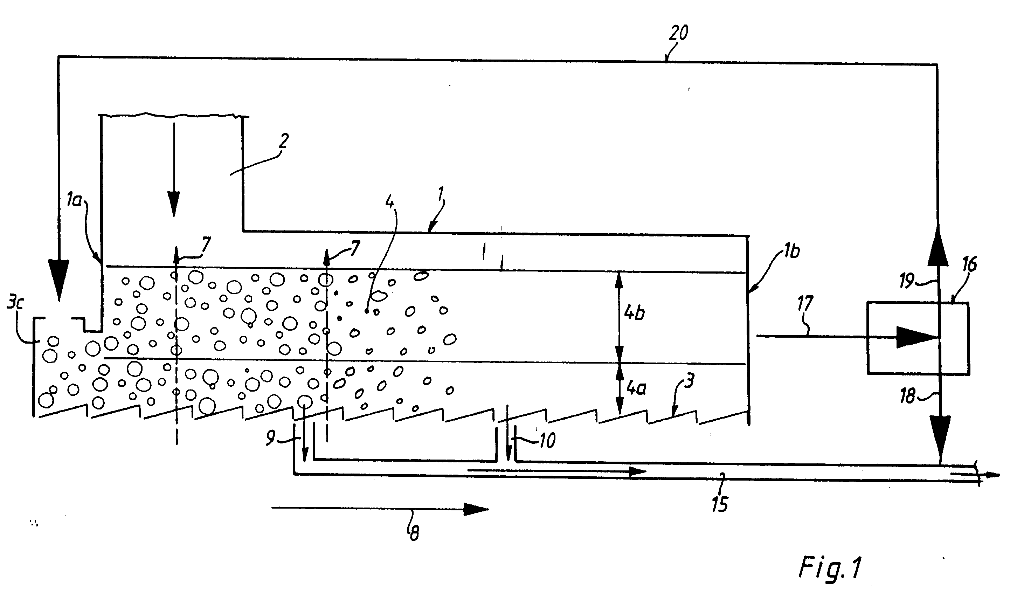

Wie anhand Fig.1 vereinfacht dargestellt ist, wird es vorgezogen, an mehreren Stellen, nämlich an den Abzugsstellen 9 und 10 bzw. an beliebig vielen Abzugsstellen über die Länge und/oder Breite der Kühlrostfläche 3 einstellbare Schüttgut-Teilmengen durch Schwerkraft aus der unteren Schüttgutschicht 4a nach unten abzuziehen. Hierbei kann es auch zweckmäßig sein, an besonders auswählbaren Abzugsstellen 9, 10 einstellbare Schüttgut-Teilmengen nach unten abzuziehen. Die aus der unteren Schüttgutschicht 4a abgezogenen Schüttgut-Teilmengen können dann mit dem am Kühlerauslauf 1b von der Kühlerrostfläche 3 ablaufenden gekühlten Schüttgut zusanmengeführt werden, was später noch näher erläutert wird. Zumindest die aus der unteren Schüttgutschicht 4a abgezogenen Schüttgut-Teilmengen können einer Nachkühlung unterworfen werden. Gegebenenfalls können jedoch auch die aus der unteren Schüttgutschicht 4a abgezogenen Schüttgut-Teilmengen zusammen mit dem am Kühlerauslauf 1b von der Kühlrostfläche 3 ablaufenden gekühlten Schüttgut noch gemeinsam in einer geeigneten, hier nicht näher veranschaulichten Kühleinrichtung nachgekühlt werden.

Es kann hierbei zweckmäßig sein, am Kühlerauslauf 1b an geeigneter Stelle (wie an sich bekannt) einen Brecher, vorzugsweise einen Walzenbrecher, zum Zerkleinern grober Teile zumindest der Anteile der oberen heißen Schüttgutschicht anzuordnen.

Vorteilhaft ist es bei diesem Kühlverfahren ferner, wenn die nach dem Abzug wenigstens einer Schüttgut-Teilmenge aus der unteren Schüttgutschicht 4a die auf der Kühlrostfläche 3 verbleibende Kühlgutmenge auf eine Schichthöhe eingestellt wird, die im wesentlichen der Schichthöhe vor der Abzugsstelle (9 oder 10) der Schüttgut-Teilmengen entspricht. Dies kann auf einfache und an sich bekannte Weise beispielsweise dadurch geschehen, daß die Transportwirkung der hin- und herbeweglichen Rostplatten 6 entsprechend verringert wird (sei es durch eine etwas geänderte Plattenhöhe, sei es durch einen separaten Antrieb mit veränderbarer Hubzahl) oder daß ein einfaches Stauelement oder dergleichen vorgesehen wird. In jedem Falle ist es zweckmäßig, über die gesamte Länge der für die Kühlung wirksamen Kühlrostfläche eine im wesentlichen konstante Schuttgut-Betthöhe (eventuell auch eine zum Kühlerauslauf hin leicht abnehmende Betthöhe) auszubilden.

Aufgrund dieser erfindungsgemäßen Verfahrensweise kann zwischen dem zu kühlenden Schüttgut, insbesondere Zementklinker, und dem dieses Schüttgut von unten nach oben durchströmenden Kühlgas ein relativ hoher Temperaturgradient erzielt werden, was zu einer besonders intensiven und wirksamen Kühlung des heißen Schüttgutes fuhrt. Dieses Kühlen kann bei der geschilderten Vorgehensweise mit relativ geringem Druckverlust erzielt werden. Diese günstige Kühlwirkung bringt dann ferner die weiteren Vorteile mit sich, daß - im Vergleich zu den bekannten Ausführungen - eine geringere bzw. kürzere Kühlrostfläche mit dementsprechend geringeren Investitions- und Betriebskosten erforderlich ist.

In der praktischen Ausführung dieses erfindungsgemäßen Verfahrens werden die Schüttgut-Teilmengen aus der unteren Schüttgutschicht 4a selbstverständlich erst nach ausreichender Kühlung abgezogen werden. Dies geschieht - betrachtet auf die Lange der Kühlrostfläche 3 - etwa in der zweiten Hälfte, vorzugsweise etwa ab Beginn des letzten Drittels des Transportweges auf dieser Kühlrostfläche 3, jedoch stets in Abhängigkeit von dem jeweiligen Kühlgut, dem gewünschten bzw. bereits erreichten Abkühlungsgrad usw..

Bevor auf einige weitere Verfahrensmaßnahmen bzw. - varianten eingegangen wird, sei die in der Zeichnung veranschaulichte Ausführungsform des Rostkühlers 1 noch etwas näher erläutert.

Wie bereits weiter oben anhand Fig.1 dargelegt worden ist, ist an der Kühlrostfläche 3 vor dem Kühlerauslauf 1b wenigstens eine Abzugsstelle für einen Teil des Schüttgutes aus der unteren Schüttgutschicht 4a vorgesehen. Vorzugsweise sind mehrere solcher Schüttgutabzugsstellen vorgesehen, von denen in Fig.1 nur zwei ganz schematisch angedeutet sind. Diese Schüttgut-Abzugsstellen 9, 10 können - in Transportrichtung (Pfeil 8) des zu kühlenden Schüttgutes 4 betrachtet - entsprechend den jeweiligen Erfordernissen über die Länge und/oder Breite der zweiten Längshälfte der Kühlrostfläche 3 verteilt ausgebildet sein.

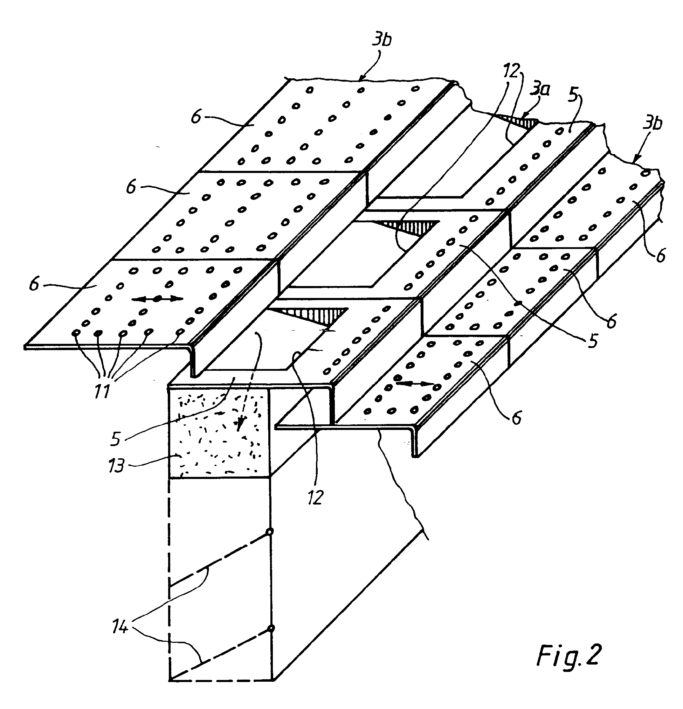

Diese Schüttgut-Abzugsstellen 9, 10 können in der Praxis auf jede geeignete und zweckmäßige Weise als Abzugs- und Ausschleusstellen für die jeweils abzuziehenden Schüttgut-Teilmengen ausgebildet sein. Eine erste Möglichkeit ist in Fig.2 vereinfacht dargestellt. In dieser Fig.2 kann man zunächst - deutlicher als in den Fig.1 - die nähere Ausbildung und Zusammenordnung von feststehenden Rostplatten 5 und hin- und herbeweglichen Rostplatten 6 in einander abwechselnden Rostplattenreihen 3a bzw. 3b erkennen. Diese Rostplatten 5, 6 können in an sich bekannter Weise mit Gasdurchtrittsöffnungen 11 geeigneter Ausbildung und Zusammenordnung versehen sein, so daß dort von unten her ein geeignetes Kühlgas, insbesondere Kühlluft, zugeführt werden kann, damit es im Quer- bzw. Kreuzstrom durch das zu kühlende Schüttgut 4 hindurchströmen kann.

In den oberen Plattenflächen von allen oder von ausgewählten feststehenden Rostplatten 5 sind (vgl. Fig.2) ausreichend große Schüttgut-Abzugsöffnungen 12 vorgesehen, unter denen Schüttgut-Abzugsschächte 13 angeordnet sind. Diese Schüttgut-Abzugsschächte 13 sind mit zweckmäßigen Verstell- und Schleuseneinrichtungen versehen, um einstellbare Schüttgut-Teilmengen - wie erläutert - aus der unteren Schüttgutschicht 4a nach unten abziehen zu können. In Fig.2 sind nur ganz schematisch Doppelpendelklappen 14 angedeutet, die so verstellbar sind, daß gewünschte bzw. einstellbare Teilmengen des Schüttgutes 4 durch die Schüttgut-Abzugsschächte 13 und somit auch durch die Schüttgut-Abzugsöffnungen 12 abgezogen bzw. ausgeschleust werden können.

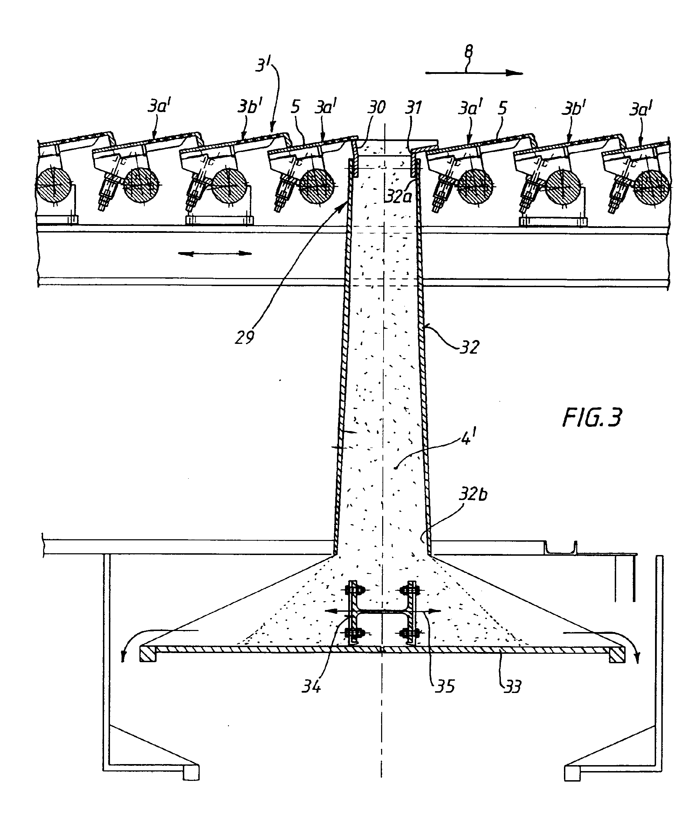

Weitere Möglichkeiten für die Ausbildung und Anordnung von Schüttgut-Abzugsstellen sind in den Fig.3, 4 und 5 veranschaulicht. Da in diesen drei weiteren Ausführungsbeispielen die konstruktive Ausbildung der Abzugsstellen selbst jeweils gleichartig ausgeführt sein kann, sei zunächst diese allgemeine konstruktive Gestaltung erläutert.

In allen drei Fällen (Fig.3, 4 und 5) ist der Einfachheit halber nur eine einzige Schüttgut-Abzugsstelle 29 veranschaulicht; selbstverständlich können entlang der Länge der jeweiligen Kühlrostfläche 3′, 3˝ bzw. 3‴ auch mehrere solcher Abzugsstellen 29 vorgesehen sein (entsprechend den vorhergehenden Schilderungen anhand Fig.1). Betrachtet man in diesen Fig.3, 4 und 5 die Schüttgut-Abzugsstelle 29, dann sei als erstes festgehalten, daß jede Abzugsstelle 29 - in Transportrichtung (Pfeil 8) des zu kühlenden Schüttgutes betrachtet - zumindest zwischen zwei aufeinanderfolgenden feststehenden Abschnitten der Kühlrostfläche 3′, 3˝, 3‴ (worauf später noch im einzelnen eingegangen wird) eine quer verlaufende Schüttgut-Abzugsöffnung 30 aufweist, die durch einen entsprechend ausgebildeten oberen Öffnungsrahmen gebildet bzw. begrenzt wird. Jede quer verlaufende Schüttgut-Abzugsöffnung 30 erstreckt sich im wesentlichen über die ganze Rostflächenbreite (senkrecht zu den Zeichenebenen der Fig.3, 4 und 5). Dabei ist unter der Schüttgut-Abzugsöffnung 30 ein etwa vertikal nach unten gerichteter Abzugsschacht 32 zum Abziehen einstellbarer Schüttgut-Teilmengen angeordnet. Diese Anordnung ist - wie die Fig.3, 4 und 5 zeigen - so vorgesehen, daß das vollkomen offene obere Ende 32a jedes Abzugsschachtes 32 mit dem vollkommen offenen Öffnungsrahmen 31 verbunden ist, während das untere Ende 32b des Abzugsschachtes 32 mit Abstand über einer ortsfesten Schüttgut-Verteilerplatte 33 offen ausmündet. Diese Schüttgut-Verteilerplatte 33 erstreckt sich ebenfalls quer über die ganze Kühlrostfläche 3′, 3 bzw. 3‴ und ist dabei in ihren Abmessungen in Längsrichtung des Kühlrostes (wie in diesen Fig. dargestellt) ausreichend groß bemessen, daß sich das im Abzugsschacht 32 befindliche Schüttgut 4′ auf dieser Verteilerplatte 33 abstützen und abböschen kann, ohne daß es von selbst (durch Schwerkraft) über den vorderen oder hinteren Rand dieser Verteilerplatte 33 ablaufen kann (vgl. Fig.3). Damit in diesen Abzugsschacht 32 nach unten abgezogenes Schüttgut 4′ von der genannten Schüttgut-Verteilerplatte 33 abfließen kann, ist über dieser Verteilerplatte 33 ein im Bereich unterhalb des offenen Abzugsschachtendes 32b sowie etwa parallel zum Abzugsschacht verlaufender Abräumbalken 34 angeordnet, der in Längsrichtung der Kühlrostfläche 3′, 3˝ bzw. 3‴, d.h. in Richtung des Doppelpfeiles 35 hin- und herbewegbar ist. Diese hin- und hergehende Hubbewegung (Doppelpfeil 35) kann mit Hilfe jeder geeigneten, an sich bekannten (daher nicht näher veranschaulichten) Hubantriebseinrichtung erzeugt werden, und zwar in der Weise, daß diese Hubbewegung einerseits ein- und ausschaltbar und andererseits in ihrer Große regelbar ist. Durch diese Maßnahmen kann diese Schüttgut-Abzugsstelle 29 generell aktiviert werden, indem ihre Antriebseinrichtung ein- bzw. ausgeschaltet wird, und ihre Schüttgut-Abzugsleistung bzw. -Abförderleistung kann durch die Regelbarkeit der Abräumbalken-Hubbewgung in der jeweils gewünschten Weise eingestellt werden.

Die Unterschiede der Ausführungsbeispiele in den Fig.3, 4 und 5 liegen - bei gleicher konstruktiver Gestaltung der Schüttgut-Abzugsstellen 29 - in der Anordnung innerhalb der jeweiligen Kühlrostfläche 3′, 3˝ bzw. 3‴.

Betrachtet man im Sinn des Zuvorgesagten das Ausführungsbeispiel gemäß Fig.3, dann ist die Schüttgut-Abzugsöffnung 30 und damit der Öffnungsrahmen 31 der Schüttgut-Abzugsstelle 29 zwischen zwei aufeinanderfolgenden feststehenden Kühlrostflächen-Abschnitten angeordnet, die durch zwei Reihen 3a′ feststehender Rostplatten 5 gebildet sind. Dementsprechend weisen diese beiden Rostplattenreihen 3a′ in Längsrichtung des Kühlrostes einen so großen Abstand voneinander auf, daß der Öffnungsrahmen 31 in geeigneter Weise dazwischen angeordnet sein kann, um an dieser Stelle eine entsprechende Teilmenge des zu kühlenden Schüttgutes durch Schwerkraft nach unten abziehen zu können. Ansonsten wechseln sich in dieser Kühlrostfläche 3′ bewegliche Rostplattenreihen 3b′ mit feststehenden Rostplattenreihen 3a′ jeweils einander ab.

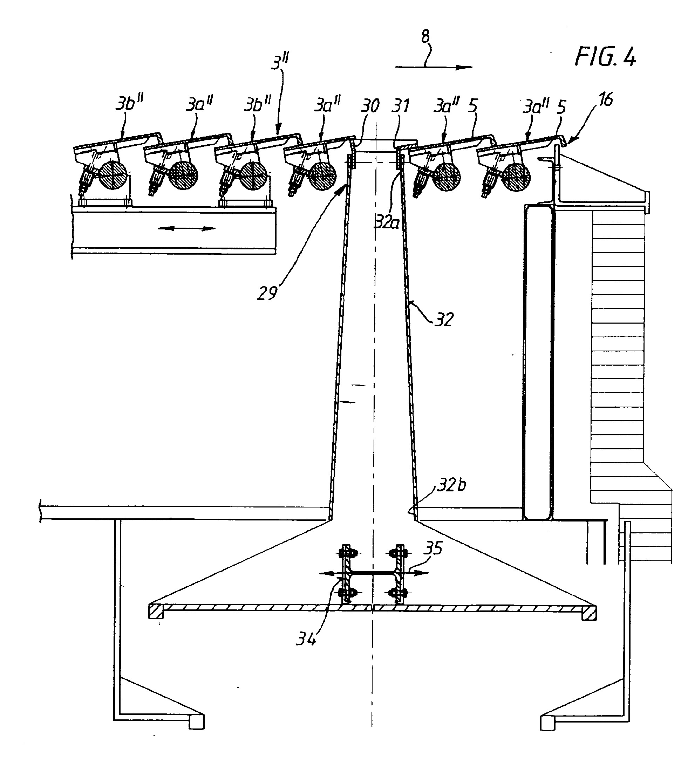

Fig.4 zeigt ein Beispiel, bei dem die Schüttgut-Abzugsstelle 29 kurz vor dem Kühlerauslauf 1b angeordnet ist. Auch in diesem Falle ist die Schüttgut-Abzugsöffnung 30 wiederum zwischen zwei feststehenden Rostplattenreihen 3a˝ im wesentlichen gleichartig wie im Beispiel der Fig.3 angeordnet. Allerdings wird es in diesem Beispiel (Fig.4) vorgezogen, in Schüttgut-Transportrichtung (Pfeil 8) die nächstfolgende und somit - bei diesem Beispiel - letzte Rostplattenreihe 3a˝ ebenfalls aus feststehenden Rostplatten 5 zu bilden. Dementsprechend sind in dieser Kühlrostfläche 3˝ - in Schüttgut-Transportrichtung (Pfeil 8) betrachtet - die letzten drei Reihen 3a˝ aus feststehenden Rostplatten 5 gebildet, während die davorliegenden Rostplattenreihen wieder einander abwechselnd feststehende und hin- und herbewegliche Rostplattenreihen 3a˝ bzw. 3b˝ sind.

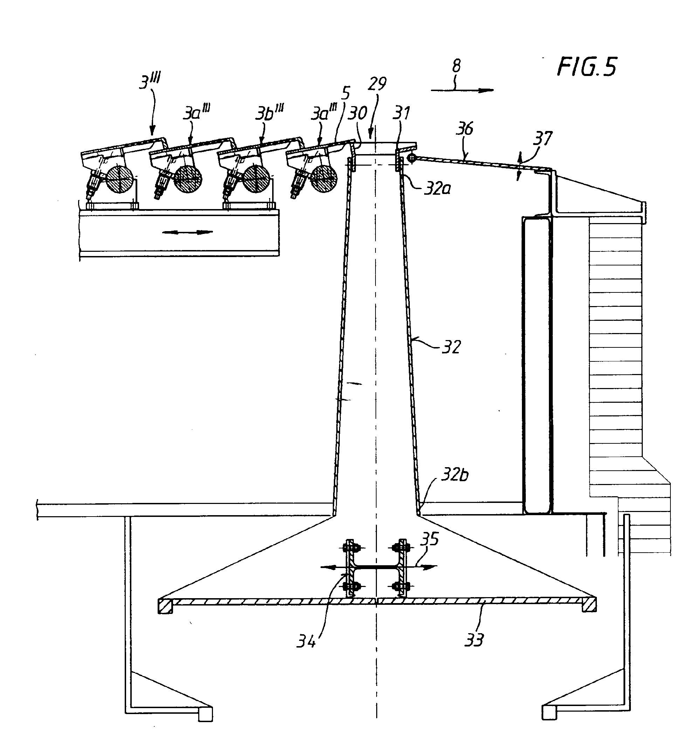

Im Beispiel der Fig.5 sei angenommen, daß die Schüttgut-Abzugsöffnung 30 und damit ihr Öffnungsrahmen 31 relativ kurz vor dem Ablaufende der eigentlichen Kühlrostfläche 3‴ vorgesehen ist. Dabei ist - in Schüttgut-Transportrichtung (Pfeil 8) betrachtet und in bezug auf die Schüttgut-Abzugsöffnung 30 - der vordere feststehende Abschnitt der Kühlrostfläche 3‴ durch eine Reihe 3a‴ feststehender Rostplatten 5 und der hintere feststehende Abschnitt der Kühlrostfläche 3‴ durch eine Gutablaufrutsche 36 gebildet, die sich parallel zu den Rostplattenreihen 3a‴ und 3b‴ erstreckt und in ihrer Neigung entsprechend dem Doppelpfeil 37 eingestellt werden kann. Diese den hintersten Teil der Kühlrostfläche 3‴ bildende Gutablaufrutsche 36 führt zu dem Vorteil, daß das von der Kühlrostfläche 3‴ abzuziehende gekühlte Schüttgut besonders günstig und zuverlässig unter Schwerkrafteinfluß in jedem Falle von selbst abrutschen kann. Im Bedarfsfalle kann diese Gutablaufrutsche 36 ebenfalls mit Kühlgas-Durchtrittsöffnungen versehen sein.

Bei allen drei zuvor beschriebenen Ausführungsbeispielen (Fig.3, 4 und 5) ist der Abzugsschacht 32 der Schüttgut-Abzugsstelle 29 stets mit Material gefüllt. Der Abzug von Schüttgut erfolgt dann jeweils durch eine entsprechende Aktivierung des Abräumbalkens 34, dessen Schüttgut-Abförderleistung - wie geschildert - in weiten Grenzen variabel ist, wordurch sich eine besonders zuverlässige und günstig steuerbare Abförderleistung ergibt und wodurch der Abzugsschacht 32 vollkommen frei von störenden Einbauten ist.

In Fig.1 ist ferner schematisch angedeutet, daß unter der Kühlrostfläche 3 wenigstens ein Sammeltransportkanal 15 angeordnet ist, um die an den Abzugsstellen 9, 10 abgezogenen Schüttgut-Teilmengen sammeln und gemeinsam abfördern zu können. Hierzu kann jede zweckmäßige Fördereinrichtung Verwendung finden, wie z.B. ein Förderband, ein Trogkettenförderer oder dgl..

Wie in Fig.1 ferner ganz schematisch hinter dem Kühlerauslauf 1b angedeutet ist, kann dort in vorteilhafter Weise eine Gutaufteilvorrichtung 16 vorgesehen sein, die einen Gutzulaufkanal 17 für an diesem Kühlerauslauf 1b ablaufendes Schüttgut sowie zwei Zweigleitungen 18, 19 aufweist. Von diesen beiden Zweigleitungen führt die erste Zweigleitung 18 zu dem bereits erwähnten Sammeltransportkanal 15, während die zweite Zweigleitung 19 mit einer - in Fig.1 nur symbolisch durch eine Linie dargestellten - Rückfördereinrichtung 20 verbunden ist, die mit dem Kühlereinlauf 1a vor der Zulaufstelle für heißes Gut in Verbindung steht. Zu diesem Zweck ragt die Kühlrostfläche 3 zumindest mit einem Rückgut-Zulauf 3c etwas unter dem Einlaufschacht 2 am Kühlereinlauf 1a vor, wie in Fig.1 angedeutet ist.

Wie sich aus der bisherigen Schilderung der Verfahrensmaßnahmen (weiter oben) entnehmen läßt, können über die verschiedenen Abzugsstellen 9, 10 einstellbare bzw. wählbare Schüttgut-Teilmengen aus der unteren Schüttgutschicht 4a abgezogen werden. Im Extremfall besteht sogar die Möglichkeit, die ganze untere Schüttgutschicht 4a, soweit sie bereits ausreichend gekühlt ist, vor Erreichen des Kühlerauslaufs 1b abzuziehen. Je nach Gesamtgröße der abgezogenen Schüttgut-Teilmengen bleibt auf der Kühlrostfläche 3 ein entsprechender Anteil des zu kühlenden Schüttgutes 4 zurück, der dann - als restliches Schüttgut - die Kühlrostfläche 3 am Kühlerauslauf 1b verläßt und dabei gegebenenfalls - wie an sich bekannt - einen Brecher zum Zerkleinern zu großer Gutanteile passiert.

Durch das Vorsehen der Gutaufteilvorrichtung 16, die Rückfördereinrichtung 20 und den Rückgut-Zulauf 3c am Kühlereinlauf 1a besteht nun ferner in vorteilhafter Weise die Möglichkeit, das die Kühlrostfläche 3 am Kühlerauslauf 1b verlassende restliche Schüttgut so aufzuteilen, daß eine Teilmenge über die Zweigleitung 18 zum Sammeltransportkanal 15 und somit aus diesem Kühlprozeß ausgeleitet wird, während eine zweite wählbare Teilmenge über die Zweigleitung 19, die Rückfördereinrichtung 20 und den Kühlgut-Zulauf 3c auf das - in Transportrichtung (Pfeil 8) betrachtet - vorderste Ende der Kühlrostfläche 3 aufgegeben wird, bevor heißes Schüttgut durch den Einlaufschacht 2 auf diese Kühlrostfläche abgeworfen wird. Auf diese Weise ergibt sich gewissermaßen eine Art "Sandwichbetrieb", wobei das über die Rückfördereinrichtung 20 auf die Kühlrostfläche 3 aufgegebene Rückgut als unterste Schüttgutschicht auf der Kühlrostfläche 3 verteilt wird; auf diese unterste Schüttgutschicht wird dann das aus dem Ofen kommende heiße Schüttgut als obere Schicht abgelegt bzw. verteilt. Das vom Kühlerauslauf 1b über die Rückfördereinrichtung 20 zurückgeführte Schüttgut kann vorzugsweise aus der - am Kühlerauslauf 1b - oberen Gutschicht 4b abgezweigt werden und somit noch eine höhere Temperatur besitzen als das bereits genügend abgekühlte und abzuführende Schüttgut. Auf diese Weise kann das noch relativ warme Rückgut als Bodenschicht der Kühlrostfläche 3 und somit zumindest teilweise als neue untere Schüttgutschicht 4a rasch vollkommen abgekühlt werden. Diese Maßnahmen tragen nicht nur zu einer erhöhten Kühlwirkung bei, sondern sie schützen auch die Rostplatten 5, 6 vor einer besonders hohen Wärmeeinwirkung seitens des frisch zugeführten heißen Schüttgutes. Darüber hinaus kann hierdurch auch der Rekuperationsgrad und damit der Kühlerwirkungsgrad im Zusammenwirken mit einem zugehörigen Brennofen erheblich gesteigert werden.

Je nach der geforderten bzw. zulässigen Endtemperatur des zu kühlenden Schüttgutes ist ein abluftfreier, zumindest aber abluftarmer Kühlbetrieb ermöglicht.

## Patentansprüche

1. Verfahren zum Kühlen von heißem Schüttgut, insbesondere Zementklinker, Erzmaterial oder dergleichen, in einem Rostkühler (1), wobei dieses heiße Schüttgut (4) vom Kühlereinlauf (1a) zum Kühlerauslauf (1b) entlang einer Kühlrostfläche (3) transportiert und dabei von einem von der Unterseite der Kühlrostfläche her zugeführten Kühlgasstrom (7) durchquert wird und wobei auf dem Transportweg dieses Schüttgutes entlang der Kühlrostfläche vor dem Kühlerauslauf (1b) ein Teil des Schüttgutes nach unten ausfällt,
gekennzeichnet durch die Kombination folgender Verfahrensschritte:
a) an wenigstens einer Abzugsstelle (9, 10, 29) entlang der Kühlrostfläche (3, 3′, 3˝, 3‴) wird eine einstellbare Schüttgut-Teilmenge durch Schwerkraft aus der Schüttgutschicht nach unten abgezogen;
b) von der am Kühlerauslauf (1b) die Kühlrostfläche (3, 3′, 3˝, 3‴) verlassenden Schüttgutmenge wird wenigstens eine weitere Teilmenge abgezweigt, zum Kühlereinlauf (1a) zurückgefördert und dort als unterste Schüttgutschicht auf die Kühlrostfläche verteilt.

2. Verfahren nach Anspruch 1, dadurch gekennzeichnet, daß an mehreren Abzugsstellen (9, 10, 29) über die Länge und/oder Breite der Kühlrostfläche (3, 3′, 3˝, 3‴) einstellbare Schüttgut-Teilmengen aus der Schüttgutschicht abgezogen werden.

3. Verfahren nach Anspruch 2, dadurch gekennzeichnet, daß an auswählbaren Abzugsstellen (9, 10, 29) einstellbare Schüttgut-Teilmengen nach unten abgezogen werden.

4. Verfahren nach Anspruch 2, dadurch gekennzeichnet, daß die abgezogenen Schüttgut-Teilmengen mit dem am Kühlerauslauf (1b) von der Kühlrostfläche (3, 3′, 3˝, 3‴) ablaufenden, fertig gekühlten Schüttgut zusammengeführt wird.

5. Verfahren nach Anspruch 4, dadurch gekennzeichnet, daß zumindest die vor dem Kühlerauslauf (1b) aus der Schuttgutschicht (4a) abgezogenen Schüttgut-Teilmengen einer Nachkühlung unterworfen werden.

6. Verfahren nach Anspruch 1, dadurch gekennzeichnet, daß nach dem Abzug wenigstens einer Schüttgut-Teilmenge aus der Schüttgutschicht die auf der Kühlrostfläche (3) verbleibende Schüttgutmenge auf eine Schichthöhe eingestellt wird, die im wesentlichen der Schichthöhe vor der Abzugsstelle der Schüttgut-Teilmenge entspricht.

7. Verfahren nach Anspruch 1, dadurch gekennzeichnet, daß die zum Kühlereinlauf (1a) zurückzufördernde Schüttgut-Teilmenge von einem noch relativ warmen oberen Teil der Schüttgutschicht abgezweigt wird.

8. Verfahren nach Anspruch 1, dadurch gekennzeichnet, daß die Schüttgut-Teilmengen aus dem unteren Teil der Schüttgutschicht in der zweiten Hälfte, vorzugsweise etwa ab Beginn des letzten Drittels des Transportweges abgezogen werden.

9. Rostkühler für heißes Schüttgut, insbesondere für Zementklinker, Erzmaterial oder dgl., enthaltend eine sich zwischen einem Kühlereinlauf (1a) und einem Kühlerauslauf (1b) in Längsrichtung erstreckende Kühlrostfläche (3, 3′, 3˝, 3‴), die eine Transportfläche für zu kühlendes Schüttgut (4) bildet und zumindest teilweise einander abwechselnde Reihen (3a, 3b) von feststehenden und hin- und herbeweglichen Rostplatten (5, 6) aufweist, die mit Gasdurchtrittsöffnungen (11) versehen sind und von Kühlgas (7) von unten nach oben durchströmt werden,
dadurch gekennzeichnet,
daß an der Kühlrostfläche (3, 3′, 3˝, 3‴) vor dem Kühlerauslauf (1b) wenigstens eine Abzugsstelle (9, 10, 29) vorgesehen ist, die zum Abziehen einer einstellbaren Schüttgut-Teilmenge aus der Schüttgutschicht durch Schwerkraft nach unten ausgebildet ist.

10. Rostkühler nach Anspruch 9, dadurch gekennzeichnet, daß jede Abzugsstelle (9, 10, 29) gesondert aktivierbar ist.

11. Rostkühler nach Anspruch 10, dadurch gekennzeichnet, daß - in Transportrichtung (8) des zu kühlenden Schüttgutes betrachtet - mehrere Abzugsstellen (9, 10) über die Länge und/oder Breite der zweiten Hälfte der Kühlrostfläche (3) verteilt angeordnet sind.

12. Rostkühler nach Anspruch 11, dadurch gekennzeichnet, daß in den oberen Plattenflächen von ausgewählten feststehenden Rostplatten (5) Schüttgut-Abzugsöffnungen (12) vorgesehen sind, unter denen mit Verstell- und Schleuseneinrichtungen (14) für einstellbare Schüttgut-Teilmengen versehene Schüttgut-Abzugsschächte (13) angeordnet sind.

13. Rostkühler nach Anspruch 10, dadurch gekennzeichnet, daß - in Transportrichtung (8) des zu kühlenden Schüttgutes betrachtet - zumindest zwischen zwei aufeinanderfolgenden festehenden Abschnitten der Kühlrostfläche (3′, 3˝, 3‴) eine quer verlaufende Schüttgut-Abzugsöffnung (30) vorgesehen ist, die sich im wesentlichen über die ganze Rostflächenbreite erstreckt und unter der ein etwa vertikal nach unten gerichteter Abzugsschacht (32) zum Abziehen einstellbarer Schüttgut-Teilmengen angeordnet ist.

14. Rostkühler nach Anspruch 13, dadurch gekennzeichnet, daß das untere Ende (32b) des Abzugsschachtes (32) mit Abstand über einer ortsfesten Schüttgut-Verteilerplatte (33) offen ausmündet, über der ein im Bereich unterhalb des offenen Abzugsschachtendes (32b) sowie etwa parallel zum Abzugsschacht verlaufender Abräumbalken (34) angeordnet ist, der in Längsrichtung der Kühlrostfläche (3′, 3˝, 3‴) hin- und herbewegbar ist, wobei diese hin- und hergehende Hubbewegung ein- und ausschaltbar sowie in ihrer Größe regelbar ist.

15. Rostkühler nach Anspruch 13, dadurch gekennzeichnet, daß die aufeinanderfolgenden feststehenden Abschnitte der Kühlrostfläche (3′, 3˝), zwischen denen die Schüttgut-Abzugsöffnung (30) angeordnet ist, durch wenigstens je eine Reihe (3a, 3a˝) feststehender Rostplatten (5) gebildet ist.

16. Rostkühler nach Anspruch 13, dadurch gekennzeichnet, daß eine Schüttgut-Abzugsöffnung (30) relativ kurz vor dem Ablaufende der Kühlrostfläche (3‴) vorgesehen ist, wobei - in Schüttgut-Transportrichtung (8) betrachtet sowie in bezug auf die Schüttgut-Abzugsöffnung (30) - der vordere feststehende Abschnitt der Kühlrostfläche durch eine Reihe (3a‴) feststehender Rostplatten (5) und der hintere feststehende Abschnitt durch eine sich parallel zu den Rostplattenreihen (3a‴, 3b‴) erstreckende, in ihrer Neigung einstellbare Gutablaufrutsche (36) gebildet ist.

17. Rostkühler nach Anspruch 9, dadurch gekennzeichnet, daß unter der Kühlrostfläche (3) wenigstens ein Sammeltransportkanal (15) für abgezogene Schüttgut-Teilmengen angeordnet ist.

18. Rostkühler nach Anspruch 9, dadurch gekennzeichnet, daß am Kühlerauslauf (1b) eine Gutaufteilvorrichtung (16) vorgesehen ist, die zwei Abzweigleitungen (18, 19) aufweist, von denen die eine (18) mit einem Sammeltransportkanal (15) für die vor dem Kühlerauslauf (1b) abgezogenen Schüttgut-Teilmengen und die zweite (19) mit einer Rückfördereinrichtung (20) verbunden ist, die mit dem Kühlereinlauf (1a) vor der Zulaufstelle für heißes Schüttgut in Verbindung steht.

19. Rostkühler nach Anspruch 9, dadurch gekennzeichnet, daß am Kühlerauslauf ein Brecher, vorzugsweise ein Walzenbrecher, zum Zerkleinern zumindest der oberen heißen Anteile der Schüttgutschicht angeordnet ist.

## Claims

1. Method of cooling hot bulk material, particularly cement clinker, ore material or the like, in a grate cooler (1), wherein this hot bulk material (4) is transported from the cooler inlet (1a) to the cooler outlet (1b) along a cooler grate surface (3) and a cooling gas stream (7) delivered from the underside of the cooler grate surface passes through the hot bulk material in cross-current, and wherein a proportion of the bulk material falls out downwards before the cooler outlet (1b) as this bulk material travels on its transport path along the cooler grate surface, characterised by the combination of the following method steps:
a) an adjustable part-quantity of bulk material is discharged downwards out of the bulk material layer by gravity at at least one discharge point (9, 10, 29) along the cooler grate surface (3, 3′, 3˝, 3‴);
b) of the quantity of bulk material leaving the cooler grate surface (3, 3′, 3˝, 3‴) at the cooler outlet (1b), at least one further part-quantity is branched off, conveyed back to the cooler inlet (1a) and is there distributed over the surface of the cooler grate as the lowest bulk material layer.

2. Method as claimed in claim 1, characterised in that adjustable part-quantities of bulk material are discharged from the layer of bulk material at several discharge points (9, 10, 29) over the length and/or breadth of the cooler grate surface (3, 3′, 3˝, 3‴).

3. Method as claimed in claim 2, characterised in that adjustable part-quantities of bulk material are discharged downwards at selectable discharge points (9, 10, 29).

4. Method as claimed in claim 2, characterised in that the discharged part-quantities of bulk material are combined with the ready-cooled bulk material running off at the cooler outlet (1b) of the cooler grate surface (3, 3′, 3˝, 3‴).

5. Method as claimed in claim 4, characterised in that at least the part-quantities of bulk material discharged from the bulk material layer (4a) before the cooler outlet (1b) are subjected to after-cooling.

6. Method as claimed in claim 1, characterised in that after the discharge of at least a part-quantity of bulk material from the bulk material layer the quantity of bulk material remaining on the cooler grate surface (3) is set to a layer height which substantially corresponds to the layer height before the discharge point of the part-quantity of bulk material.

7. Method as claimed in claim 1, characterised in that the part-quantity of bulk material to be conveyed back to the cooler inlet (1a) is branched off from an upper part of the bulk material layer which is still relatively warm.

8. Method as claimed in claim 1, characterised in that the part-quantities of bulk material are discharged from the lower part of the bulk material layer in the second half, preferably approximately from the beginning of the last third of the transport path.

9. Grate cooler for hot bulk material, particularly for cement clinker, ore material or the like, containing a cooler grate surface (3, 3˝, 3‴) which extends in the longitudinal direction between a cooler inlet (1a) and a cooler outlet (1b), forms a transport surface for bulk material (4) to be cooled and has rows (3a, 3b) of fixed and reciprocating grate plates (5, 6) which at least partially alternate with one another, the said grate plates being provided with gas openings (11) through which cooling gas (7) flows upwards from below, characterised in that at least one discharge point (9, 10, 29) which is constructed for the discharge downwards of an adjustable part-quantity of bulk material from the bulk material layer by gravity is provided before the cooler outlet (1b) on the cooler grate surface (3, 3′, 3˝, 3‴).

10. Grate cooler as claimed in claim 9, characterised in that each discharge point (9, 10, 29) can be activated separately.

11. Grate cooler as claimed in claim 10, characterised in that - viewed in the direction of transport (arrow 8) of the bulk material to be cooled - several discharge points (9, 10) are distributed over the length and/or breadth of the second half of the cooler grate surface (3).

12. Grate cooler as claimed in claim 11, characterised in that bulk material discharge openings (12) are provided in the upper plate surfaces of selected fixed grate plates (5), and bulk material discharge shafts (13) which are provided with adjustment and valve arrangements (14) for adjustable part-quantities of bulk material are arranged below these openings.

13. Grate cooler as claimed in claim 10, characterised in that - when viewed in the direction of transport (8) of the bulk material to be cooled a bulk material discharge opening (30) which extends transversely is provided at least between two successive fixed sections of the cooler grate surface (3, 3′, 3˝, 3‴) and extends substantially over the entire width of the grate surface, and a discharge shaft (32) which is aligned approximately vertically downwards is arranged below the bulk material discharge opening to discharge adjustable part-quantities of bulk material.

14. Grate cooler as claimed in claim 13, characterised in that the lower end (32b) of the discharge shaft (32) opens with a clearance above a stationary bulk material distributor plate (33), and a reclaiming beam (34) which is movable to and fro in the longitudinal direction of the cooler grate surface (3′, 3˝, 3‴) is arranged above the distributor plate in the region below the open end (32b) of the discharge shaft and extends parallel to the discharge shaft, and this reciprocating movement to and fro can be switched on and off and is adjustable in size.

15. Grate cooler as claimed in claim 13, characterised in that the each of the successive fixed sections of the cooler grate surface (3′, 3˝) between which the bulk material discharge opening (30) is arranged is formed by at least one row (3a, 3a˝) of fixed grate plates (5).

16. Grate cooler as claimed in claim 13, characterised in that a bulk material discharge opening (30) is provided relatively shortly before the outlet end of the cooler grate surface (3‴), and in this case - when viewed in the bulk material transport direction (8) and with reference to the bulk material discharge opening (30) - the front fixed section of the cooler grate surface is formed by a row (3a‴) of fixed grate plates (5) and the rear fixed section is formed by a material discharge chute (36) which extends parallel to the rows (3a‴, 3b‴) of grate plates and can be adjusted in its inclination.

17. Grate cooler as claimed in claim 9, characterised in that at least one combined transport channel (15) is arranged below the cooler grate surface (3) for discharged part-quantities of bulk material.

18. Grate cooler as claimed in claim 9, characterised in that a material distribution device (16) which has two branch ducts (18, 19) is provided at the cooler outlet (1b), and of these two branch ducts one (18) is connected to a combined transport channel (15) for the part-quantities of bulk material discharged before the cooler outlet (1b) and the second (19) is connected to a return conveyor (10) which is connected to the cooler inlet (1a) before the delivery point for hot bulk material.

19. Grate cooler as claimed in claim 9, characterised in that a crusher, preferably a roll crusher, is arranged at the cooler outlet to crush at least the upper hot parts of the bulk material layer.

## Revendications

1. Procédé de refroidissement de matière chaude en vrac, en particulier de clinker de ciment, de minerai ou analogue, dans un refroidisseur à grilles (1), cette matière chaude en vrac (4) étant transportée de l'entrée (1a) à la sortie (1b) du refroidisseur le long d'une surface grillagée de refroidissement (3) le long de laquelle elle est traversée par un courant de gaz de refroidissement (7) envoyé par le côté inférieur de la surface grillagée de refroidissement, une partie de la matière en vrac tombant avant la sortie du refroidisseur (1b) sur son trajet de transport le long de la surface grillagée de refroidissement,
caractérisé par la combinaison des étapes suivantes du procédé :
a) une fraction réglable de matière en vrac est soutirée par le bas par gravité de la couche de matière en au moins un lieu de soutirage (9, 10, 29) le long de la surface grillagée de refroidissement (3, 3′, 3˝, 3‴),
b) au moins une autre fraction de la matière en vrac quittant la surface grillagée de refroidissement (3, 3′, 3˝, 3‴) à la sortie du refroidisseur (1b) est dérivée, renvoyée à l'entrée (1a) du refroidisseur et répartie en cet emplacement sur la surface grillagée de refroidissement de manière qu'elle y forme la couche inférieure de matière.

2. Procédé selon la revendication 1, caractérisé en ce que des fractions réglables de matière en vrac sont soutirées de la couche de matière en plusieurs lieux de soutirage (9, 10, 29) sur la longueur et/ou la largeur de la surface grillagée de refroidissement (3, 3′, 3˝, 3‴).

3. Procédé selon la revendication 2, caractérisé en ce que des fractions réglables de matière en vrac sont soutirées vers le bas en des lieux sélectionnables de soutirage (9, 10, 29).

4. Procédé selon la revendication 2, caractérisé en ce que les fraction soutirées de matière en vrac sont réunies à la matière dont le refroidissement est achevé et qui est évacuée de la surface grillagée de refroidissement (3, 3′, 3˝, 3‴) à la sortie (1b) du refroidisseur.

5. Procédé selon la revendication 4, caractérisé en ce qu'au moins la fraction de matière en vrac soutirée de la couche de matière (4a) avant la sortie (1b) du refroidisseur est soumise à un post-refroidissement.

6. Procédé selon la revendication 1, caractérisé en ce que la quantité de matière en vrac demeurant sur la surface grillagée de refroidissement (3) après le soutirage d'au moins une fraction de matière de la couche de matière en vrac est réglée à une hauteur de couche qui correspond sensiblement à la hauteur de couche se trouvant devant le lieu de soutirage de la fraction de matière.

7. Procédé selon la revendication 1, caractérisé en ce que la fraction de matière en vrac devant être recyclée à l'entrée (1a) du refroidisseur est prélevée sur une partie supérieure encore relativement chaude de la couche de matière.

8. Procédé selon la revendication 1, caractérisé en ce que les fractions de matière en vrac sont soutirées de la partie inférieure de la couche dans la seconde moitié, de préférence à peu près à partir du début du dernier tiers du trajet de transport.

9. Refroidisseur à grilles de matière chaude en vrac, en particulier de clinker de ciment, de minerai ou analogue, comprenant une surface grillagée de refroidissement (3, 3′, 3˝, 3‴) qui est située dans la direction de la longueur entre une entrée (1a) et une sortie (1b) du refroidisseur, qui forme une surface de transport de la matière en vrac (4) à refroidir et qui comprend au moins partiellement des rangées alternantes (3a, 3b) de plaques grillagées fixes et mobiles alternativement (5, 6) qui comportent des trous (11) de passage de gaz et sont balayées de bas en haut par un gaz de refroidissement (7),
caractérisé en ce qu'au moins un lieu de prélèvement (9, 10, 29), prévu sur la surface grillagée de refroidissement (3, 3′, 3˝, 3‴) avant la sortie (1b) du refroidisseur, est conformé pour qu'une fraction réglable de matière soit soutirée de la couche de matière en vrac par gravité vers le bas.

10. Refroidisseur à grilles selon la revendication 9, caractérisé en ce que chaque lieu de soutirage (9, 10, 29) est activable indépendamment.

11. Refroidisseur à grilles selon la revendication 10, caractérisé en ce que plusieurs lieux de soutirage (9, 10) sont disposés en étant répartis - en étant observés dans le sens de transport (8) de la matière en vrac à refroidir - sur la longueur et/ou la largeur de la seconde moitié de la surface grillagée de refroidissement (3).

12. Refroidisseur à grilles selon la revendication 11, caractérisé en ce que des trous de soutirage de matière (12), sous lesquels des goulottes de soutirage (13) équipées de dispositifs (14) de réglage et de transfert vers l'extérieur de fractions réglables de matière, sont prévus dans la surface supérieure de plaques grillagées sélectionnées fixes (5).

13. Refroidisseur à grilles selon la revendication 10, caractérisé en ce qu'un trou transversal (30) de soutirage de matière prévu - par rapport au sens de transport (8) de la matière en vrac à refroidir - au moins entre deux parties successives fixes de la surface grillagée de refroidissement (3′, 3˝, 3‴) se prolonge sensiblement sur la totalité de la largeur de la surface grillagée, trou de soutirage sous lequel une goulotte sensiblement verticale (32) orientée vers le bas est disposée pour le soutirage de fractions réglables de matière en vrac.

14. Refroidisseur à grilles selon la revendication 13, caractérisé en ce que l'extrémité inférieure (32b) de la goulotte de soutirage (32) débouche par une ouverture à distance au-dessus d'une plaque fixe (33) de répartition de la matière en vrac au-dessus de laquelle une poutrelle de déblaiement (34) sensiblement parallèle à la goulotte de soutirage est disposée dans la région située sous l'extrémité ouverte (32b) de la goulotte de soutirage, cette poutrelle étant déplaçable alternativement dans la direction de la longueur de la surface grillagée de refroidissement (3′, 3˝, 3‴) et ce mouvement alternatif pouvant être enclenché et déclenché et sa grandeur étant réglable.

15. Refroidisseur à grilles selon la revendication 13, caractérisé en ce que les parties successives fixes de la surface grillagée de refroidissement (3′, 3˝), entre lesquelles les trous (30) de soutirage de matière en vrac sont disposés, sont formées d'au moins une rangée (3a, 3a˝) de plaques grillagées fixes (5).

16. Refroidisseur à grilles selon la revendication 13, caractérisé en ce qu'un trou (30) de soutirage de matière en vrac est prévu à relativement faible distance au devant de l'extrémité de décharge de la surface grillagée de refroidissement (3‴), la partie antérieure fixe - observée dans le sens de transport (8) de la matière en vrac ainsi que par rapport au trou (30) de soutirage de la matière - de la surface grillagée de refroidissement étant formée d'une rangée (3a‴) de plaques grillagées fixes (5) et la partie arrière fixe étant formée d'un glissoir de décharge de matière (36) qui est parallèle aux rangées de plaques grillagées (3a‴, 3b‴) et dont l'inclinaison est réglable.

17. Refroidisseur à grilles selon la revendication 9, caractérisé en ce qu'au moins un canal collecteur de transport (15) des fractions soutirées de matière en vrac est disposé sous la surface grillagée de refroidissement (3).

18. Refroidisseur à grilles selon la revendication 9, caractérisé en ce qu'un dispositif de partage de matière (16) prévu à la sortie (1b) du refroidisseur comprend deux conduits d'embranchement (18, 19) dont l'un (18) est raccordé à un canal collecteur (15) de transport des fractions de matière en vrac soutirées avant la sortie (1b) du refroidisseur et dont le second (19) est raccordé à un dispositif de transport en retour (20) qui communique avec l'entrée (1a) du refroidisseur au-devant de l'emplacement d'arrivée de la matière en vrac chaude.

19. Refroidisseur à grilles selon la revendication 9, caractérisé en ce qu'un concasseur, de préférence un concasseur à cylindres de fragmentation d'au moins les fractions supérieures chaudes de la couche de matière en vrac est disposé à la sortie du refroidisseur.
